# FASCICULE DE BREVET EUROPEEN

(11) **EP 2 332 181 B1**
(45) Date de publication et mention de la délivrance du brevet: **26.12.2018**
(21) Numéro de dépôt: 09787317.8
(22) Date de dépôt: 29.09.2009
(51) Int. Cl.: H02S 40/44, H02S 20/26, F24S 60/30, F24S 20/67, F24S 20/66, E04B 2/88, H02S 40/42

(54) **DISPOSITIF DE PRODUCTION D'ÉNERGIE À PARTIR DU RAYONNEMENT SOLAIRE**
EINRICHTUNG ZUM ERZEUGEN VON ENERGIE AUS SOLARSTRAHLUNG
DEVICE FOR PRODUCING ENERGY FROM SOLAR RADIATION

(30) Priorité: 02.10.2008 FR 0805443
(43) Date de publication de la demande: 15.06.2011
(73) Titulaire: SUEZ Groupe, 92040 Paris la Défense Cedex (FR)
(72) Inventeur: DUONG, Frédéric, F-66370 Pezilla-la-Rivière (FR)
(74) Mandataire: IPAZ
(86) Numéro de dépôt international: PCT/IB2009/054248
(87) Numéro de publication internationale: WO 2010/038188

(56) Documents cités:
- DE-A1- 19 914 079
- DE-U1- 29 908 205
- LLORET A ET AL: "THE MATARO PUBLIC LIBRARY: A 53 kWp GRID CONNECTED BUILDING WITH INTEGRATED PV-THERMAL MULTIFUNCTIONAL MODULES" 13TH. E.C. PHOTOVOLTAIC SOLAR ENERGY CONFERENCE. NICE, FRANCE, OCT. 23 19951023 BEDFORD : H.C. STEPHENS & ASSOCIATION, GB, vol. CONF. 13, 23 octobre 1995 (1995-10-23), pages 490-493, XP001137316 ISBN: 978-0-9521452-7-1

## Description

La présente invention est relative à un dispositif de production d'énergie, à partir du rayonnement solaire, destiné à un bâtiment.

Les panneaux photovoltaïques intégrés aux bâtiments résidentiels, tertiaires et industriels sont largement mis en oeuvre dans le cadre du développement des énergies renouvelables, pour récupérer une partie de l'énergie solaire. La capture des photons par (es atomes de cristal de silicium permet de produire une différence de potentiel. Le courant circule entre les électrodes et il est connecté aux bornes de chacun des panneaux installés en circuit parallèle.

Selon la technologie utilisée, le rendement énergétique de conversion de l'énergie solaire incidente en énergie électrique injectable sur un réseau est compris entre 8 % et 15 % (20 % au maximum en laboratoire).

Le rendement de production électrique d'exploitation de panneaux solaires photovoltaïques s'établit en moyenne à 10 %.

Les panneaux sont constitués de cellules qui sont noyées dans une résine et insérées entre deux parois vitrées ou en matériaux composites transparents.

Il est à noter que la majeure partie du rayonnement solaire (90 %) qui est reçue par les panneaux photovoltaïques est soit réfléchie, soit transformée en chaleur qui se dissipe par convection et rayonnement vers l'extérieur.

Il est connu du document LLORET A ET AL ("The Mataro Public Library: A 53 Kwp Grid Connected Building With Integrated PY-Thermal Multifunctional Modules", 13th. E.C. Photovoltaic Solar Energy Conférence. Nice, France, Oct. 23 19951023 Bedford: H.C. Stephens & Association, GB, (19951023), Vol. Conf. 13, ISBN 978-0-9521452-7-1, pages 490 - 493) l'utilisation de modules photovoltaïques semi-transparents, en combinaison avec une circulation d'air derrière les panneaux dirigée vers l'entrée d'un système de chauffage. Toutefois, ce document n'enseigne pas de source supplémentaire de chaleur en provenance de la paroi intérieure ou bien de l'intérieur du bâtiment.

En outre, le document DE19914079 divulgue un module destiné à générer de l'énergie du rayonnement solaire, ledit module comprenant une première et une seconde paroi séparées par un espace libre traversé par un flux d'air. Ce document décrit une façade de bâtiment comprenant une paroi extérieure équipée de panneaux solaires (10) et une paroi interne opaque (11) équipé d'une isolation (18), mais dont la seconde paroi 11 ne comporte pas d'ouvertures.L'invention a pour but, surtout, de chercher à limiter l'énergie solaire perdue lors de l'utilisation de panneaux solaires photovoltaïques.

Selon l'invention, un dispositif de production d'énergie, à partir du rayonnement solaire, destiné à un bâtiment, est décrit dans la revendication indépendante 1 et comprend, du côté extérieur, au moins une première paroi composée de panneaux photovoltaïques translucides et, vers l'intérieur à distance de la première paroi, une seconde paroi opaque de couleur sombre disposée en vis à vis de la première paroi, un espace libre étant créé entre la première et la seconde paroi, l'énergie étant produite sous forme électrique par les panneaux photovoltaïques et sous forme thermique par la seconde paroi, qui récupère en grande partie le rayonnement qui a traversé la première paroi et permet de l'utiliser sous forme de chaleur en supplément de la production d'électricité d'origine photovoltaïque

Il existe des panneaux photovoltaïques translucides qui permettent l'éclairage zénithal des bâtiments ; dans ce cas, leur mise en oeuvre s'apparente à des parois vitrées.

L'espace libre entre les parois est prévu pour permettre la circulation d'un flux d'air entre la première paroi et la seconde paroi, de sorte que les panneaux photovoltaïques soient refroidis. Dans ces conditions de température plus basse le rendement des panneaux s'en trouve amélioré.

Le dispositif comprend un moyen de capture d'air entre la première paroi et la seconde paroi pour une utilisation thermique ; ce moyen de capture d'air peut comprendre une conduite reliée à une ventilation mécanique

Le dispositif comprend un moyen d'introduction d'air tempéré dans l'espace libre. Selon un mode de réalisation, le moyen d'introduction d'air tempéré comprend au moins une ouverture prévue dans la seconde paroi.

Le dispositif peut comporter un circuit en serpentin avec une circulation d'eau ou d'un liquide quelconque, inséré entre la première et la seconde paroi.

La seconde paroi peut comporter une couche d'isolant thermique. La seconde paroi peut être partiellement translucide. Cette seconde paroi peut être perforée, afin d'assurer un flux perméo-dynamique entre la lame d'air ventilée et l'intérieur d'un bâtiment.

Le dispositif peut être agencé de sorte que l'énergie thermique produite est utilisée pour réchauffer l'air de combustion d'un four, couplé à une production d'électricité.

Le dispositif peut être agencé de sorte que l'énergie thermique produite est utilisée pour chauffer un fluide contenu dans un réservoir.

D'autres caractéristiques et avantages de l'invention apparaîtront dans la description qui suit de modes de réalisation préférés avec référence aux dessins annexés, mais qui n'ont aucun caractère limitatif. Sur ces dessins :
Fig. 1 est un schéma en coupe d'un dispositif de production d'énergie selon l'invention.
Fig. 2 est un schéma en coupe d'un deuxième mode de réalisation d'un dispositif de production d'énergie selon l'invention.
Fig. 3 est un schéma en coupe d'un troisième mode de réalisation d'un dispositif de production d'énergie selon l'invention.
Fig. 4 est un détail, à plus grande échelle, du mode de réalisation de l'invention selon Fig. 2, et
Fig. 5 est un détail, à plus grande échelle, d'une variante du mode de réalisation selon Fig. 1.

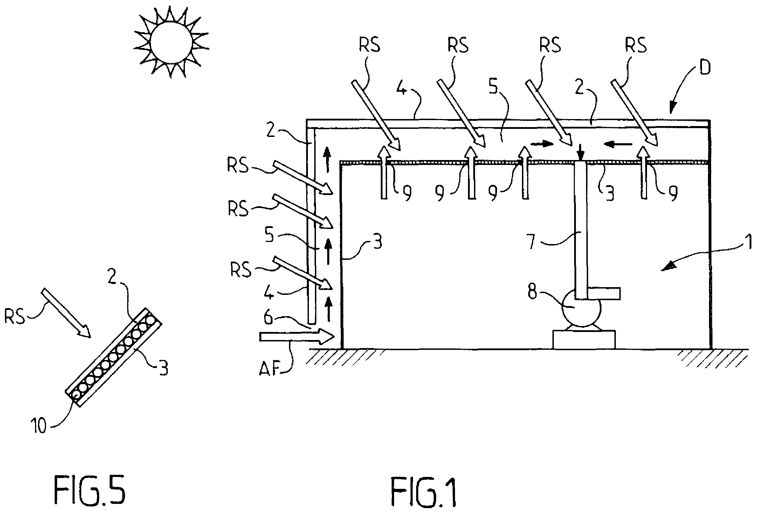

On peut voir sur Fig. 1 une portion d'un bâtiment 1. Le bâtiment 1, qui peut être industriel ou résidentiel, est recouvert d'un dispositif D selon l'invention. Le dispositif D comporte une paroi externe 2 et une paroi interne 3, à distance de la paroi 2.

La paroi externe 2 est formée par la juxtaposition de panneaux photovoltaïques 4 translucides, ou transparents, disposés autour et au-dessus du bâtiment 1.

La paroi interne 3 est formée par la juxtaposition de panneaux de couleur sombre, par exemple anthracite, notamment en polycarbonate. Un espace libre 5 subsiste entre la paroi externe 2 et la paroi interne 3. Des ouvertures 6 sont prévues dans la paroi externe 2 afin de permettre une arrivée et une circulation d'air dans l'espace libre 5. En variante, la lame d'air dans l'espace 5 peut être statique.

Des ouvertures 9 sont prévues dans la paroi interne 3, lorsqu'elle fait office de plafond et mettent en communication la zone de l'espace libre 5 située au dessus du bâtiment 1, avec l'intérieur du bâtiment 1.

Une conduite 7 traverse la paroi 3 et permet, à l'aide d'un ventilateur 8 disposée à l'extrémité de la conduite 7, d'extraire de l'air de l'espace libre 5 pour le souffler vers l'intérieur du bâtiment 1.

Le fonctionnement du dispositif selon l'invention est le suivant.

Le rayonnement solaire RS atteignant le bâtiment 1 et le dispositif D est pour partie converti en énergie électrique par les panneaux photovoltaïques 4. On rappelle que l'énergie solaire reçue par une surface horizontale peut être d'environ 1200kWh/m2/an dans une zone à climat tempéré, il peut atteindre 1800 kWh/m²/an dans les régions méridionales.

Un part importante du rayonnement solaire RS traverse la paroi externe 2 et est absorbée et convertie en chaleur au niveau de la paroi interne 3 de couleur sombre. Par « effet de serre » cette paroi 3 réchauffe l'air présent dans l'espace libre 5.

La mise en marche du ventilateur 8 provoque l'entrée d'air frais AF dans l'espace libre 5, depuis l'extérieur du bâtiment par les ouvertures 6.

L'espace libre 5 est balayé par l'air, en provenance des ouvertures 6, qui se réchauffe progressivement au contact de la paroi interne 3. On obtient ainsi un effet pariéto-dynamique.

Les ouvertures 9 permettent de faire pénétrer de l'air en provenance de l'intérieur ou de l'extérieur du bâtiment dans l'espace libre 5.

L'air réchauffé dans l'espace 5 est aspiré vers l'intérieur du bâtiment par le ventilateur 8 par l'intermédiaire de la conduite 7. Cet air chaud peut être utilisé pour la combustion d'un combustible solide, liquide ou gazeux, ou utilisé directement pour le chauffage du bâtiment 1 ou de l'équipement industriel.

Le dispositif D selon l'invention permet de combiner sur une même surface une production directe d'électricité photovoltaïque simultanément à une production d'énergie thermique. La circulation d'air dans l'espace 5 permet de refroidir les panneaux photovoltaïques 4, et d'améliorer leur rendement de production électrique

En variante illustrée par le détail de Fig. 5, il est possible d'installer un circuit d'eau sous forme de serpentin 10 inséré entre les deux parois 2 et 3 dont l'eau, ou un fluide caloporteur, sera réchauffée par le passage de l'air, ceci afin de transporter la chaleur récupérée vers une utilisation déportée.

Une autre possibilité est d'isoler thermiquement la paroi interne 3 vis-à-vis de l'intérieur du bâtiment 1.

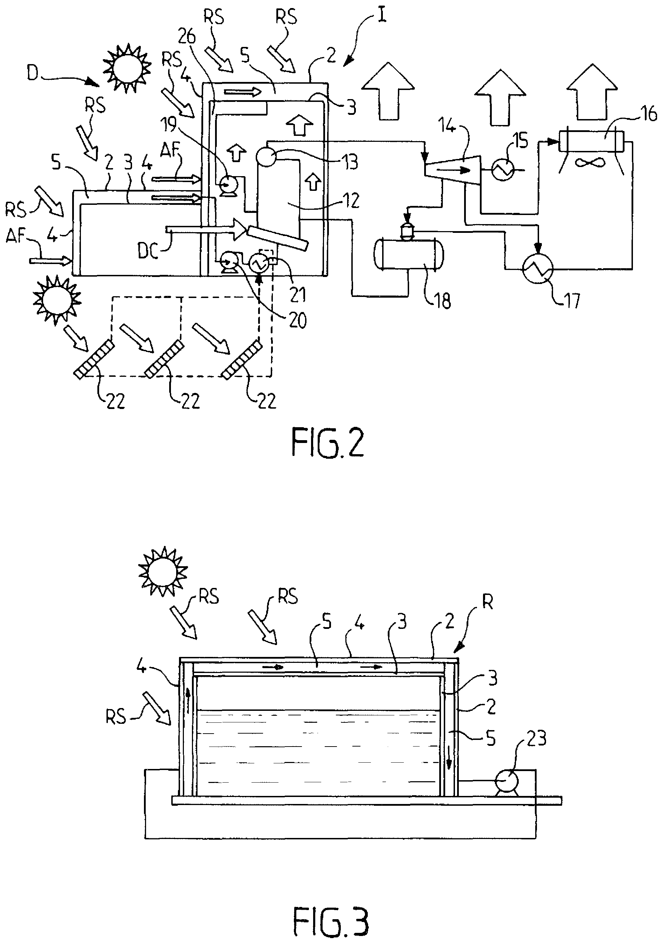

Fig. 2 illustre le cas d'une installation I de production d'énergie par combustion de déchets.

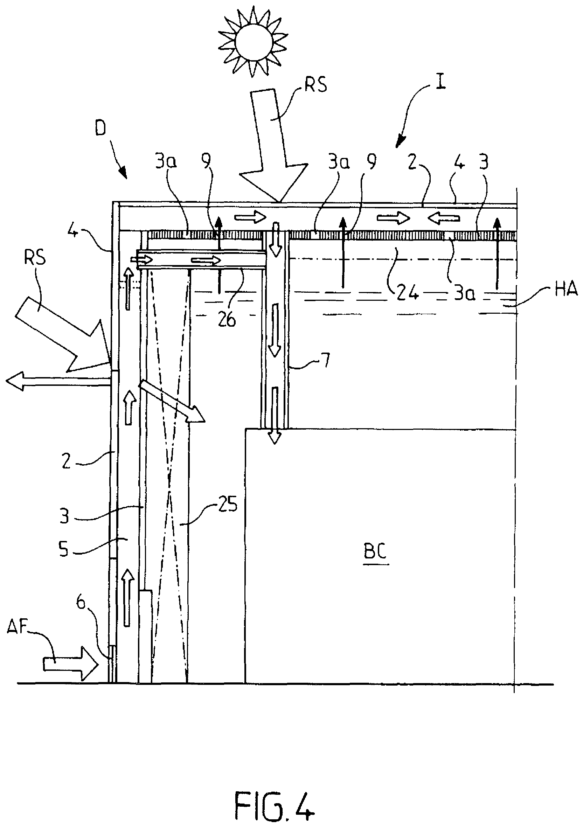

Autour des bâtiments de l'installation un dispositif D similaire à celui de Fig. 1 est mis en place. Cet aspect est plus particulièrement illustré Fig. 4. Sur les murs et les toits de l'installation I, une paroi externe 2 et une paroi interne 3 sont mises en place.

La paroi externe 2 est formée par la juxtaposition de panneaux photovoltaïques 4 transparents. La paroi interne 3 est formée par la juxtaposition de panneaux en polycarbonate de couleur sombre.

La partie en plafond de la paroi interne 3 est fixée sur des longerons métalliques 24 par l'intermédiaire d'éléments 3a. Les longerons reposent sur des piliers 25.

Un espace libre 5 subsiste entre la paroi externe 2 et la paroi interne 3. Des ouvertures 6 sont prévues dans la paroi externe 2 afin de permettre une arrivée d'air AF dans l'espace libre 5.

Des ouvertures 9 sont prévues dans la paroi interne 3, lorsqu'elle fait office de plafond et mettent en communication la zone de l'espace libre 5 située au dessus des bâtiments de l'installation I, avec l'intérieur des ces bâtiments.

Des conduites 7 et 26 permettent d'extraire de l'air de l'espace libre 5 pour les besoins de l'installation I, notamment pour alimenter en air un four 12 de combustion de déchets ou de combustible fossile liquide, solide ou gazeux.

L'installation I fonctionne comme suit.

Des déchets combustibles DC sont introduits dans le four 12 équipé d'une chaudière 13 pour produire de la vapeur. La vapeur produite entraîne une turbine 14 couplée à un alternateur 15.

La vapeur sortant de la turbine 14 est ensuite condensée dans un aérocondenseur 16, et le condensat est préchauffé dans un préchauffeur 17 utilisant de la vapeur soutirée de la turbine 14.

A la sortie du préchauffeur 17, le condensat traverse une unité 18 de dégazage, qui peut être alimentée en sus par un soutirage au niveau de la turbine 14.

A la sortie de l'unité18, le cycle est bouclé par un retour du condensat vers la chaudière 13.

Un ventilateur 19 (Fig.2) permet, par l'intermédiaire des conduites 7 et 26, de soutirer de l'air chaud de l'espace libre 5 dans la zone située au-dessus du four 12 et de la chaudière 13, pour l'injecter dans le four 12 afin d'assurer le réchauffage de l'air secondaire.

De la même façon, un ventilateur 20 permet de soutirer de l'air chaud d'une autre zone de l'espace libre 5. L'air soutiré est réchauffé dans un préchauffeur 21 avant d'être injecté dans le four 12 ceci afin d'assurer le réchauffage de l'air primaire utilisé pour le séchage puis la combustion des déchets.

Dans cette optique des chauffe-eau solaires 22 (Fig.2) également équipés en surface de panneaux photovoltaïques translucides sont disposés sur les toits de bâtiments de l'installation I. L'eau issue des chauffe-eau solaires 22 est utilisée dans le préchauffeur 21 pour le chauffage de l'air de combustion soutiré de l'espace libre 5.

Les ouvertures 9 (Fig.4) permettent à l'air chaud stratifié HA situé en partie supérieure du bâtiment, d'une température pouvant atteindre 40°C et plus, présent au voisinage du four 12 et de la chaudière 13, de pénétrer dans l'espace libre 5 ce qui permet un apport thermique supplémentaire de chaleur dans la conduite 7. L'ensemble du ventilateur 19, du four 12 et de la chaudière 13 de Fig.2, est schématiquement représenté par un rectangle BC sur Fig.4.

Le bilan énergétique du fonctionnement de l'installation de captation et de transformation de l'énergie solaire est considérablement amélioré. En complément de l'énergie électrique directement produite par les panneaux photovoltaïques translucides, Il est possible d'obtenir une production de chaleur d'environ 70% de l'énergie solaire totale incidente , et de convertir cette chaleur en énergie électrique avec un rendement thermodynamique d'environ 25% Soit 3 fois plus que la simple production électrique des panneaux photovoltaïques classiques.

Des variantes autour de ce concept mixte capteur photovoltaîque associé à un capteur thermique sont possibles. Par exemple, il est possible de ne prévoir une paroi externe 2 et une paroi interne 3 que dans certaines zones de l'installation I. En particulier il est possible de privilégier les zones où l'ensoleillement est maximum coté sud, sud est et le sud-ouest ou la toiture horizontale ou inclinée, pour l'hémisphère nord.

Fig. 3 illustre le cas d'un réservoir R devant être chauffé, par exemple un digesteur ou une cuve d'effluent liquide.

Le réservoir R comporte une paroi principale en béton ou en acier. Un dispositif D similaire à celui de Fig. 1 est mis en place autour du réservoir R.

Dans ce cas la paroi interne 3 n'est pas isolée thermiquement et permet de transmettre la chaleur présente dans l'espace libre 5 à la matière à chauffer présente à l'intérieur du réservoir R.

Pendant les phases d'ensoleilement, une circulation d'air chaud dans l'espace libre 5 est assurée à l'aide d'un ventilateur 23, pour favoriser le chauffage de l'intérieur du réservoir et minimiser les pertes thermiques.

En période de non ensoleillement, notamment la nuit, le ventilateur 23 est arrêté, et la couche d'air statique emprisonnée entre les 2 parois assure une isolation thermique efficace.

L'invention comporte de nombreux avantages et permet notamment d'utiliser les surfaces des bâtiments exposées au sud, sud-est, sud ouest (pour l'hémisphère nord), verticales, inclinées ou horizontales afin de capter l'énergie solaire et la transformer simultanément en électricité photovoltaïques et en chaleur récupérable sous forme d'air ou d'eau chaude.

La transformation de l'énergie thermique dans un cycle thermodynamique permet de produire de l'énergie électrique en utilisant les équipements classiques. Dans le cycle thermodynamique, la chaleur disponible au niveau des circuits eau et vapeur peut être utilisée en cogénération pour assurer le chauffage de bâtiment ou les besoins de procédés divers

Les performances énergétiques globales du dispositif mixte combiné photovoltaïque, thermique et thermodynamique de l'utilisation de l'énergie solaire sont multipliées par un facteur important par rapport à une production photovoltaïque ou thermique seule.

La vue architecturale des bâtiments se trouve transformée en bâtiments à énergie active, utilisant avec une efficacité énergétique très élevée l'énergie solaire pour produire de l'électricité et de la chaleur

L'invention permet l'utilisation d'une ressource importante auparavant perdue ce qui a un impact énergétique, économique et environnemental important. Aujourd'hui environ 88 % du rayonnement solaire incident n'est pas exploité par les cellules photovoltaïques.

Certaines applications permettraient d'obtenir des unités à énergie positive, en assurant à la fois la production d'électricité et de chaleur pour le fonctionnement du procédé, par exemple station d'épuration ou STEP, séchage de boue, etc...

Le surcoût du dispositif par rapport à des panneaux photovoltaïques seuls n'est pas excessif, car la mise en oeuvre de panneaux mixtes est comparable à celle de panneaux photovoltaïques seuls.

Les applications du dispositif selon l'invention sont nombreuses.

L'installation du dispositif selon l'invention est possible dans tout bâtiment résidentiel, tertiaire et industriel, associée éventuellement à un cycle thermodynamique, pour la production d'électricité et d'eau chaude à usage sanitaire ou industriel.

Les installations de séchage nécessitant de la chaleur sous la forme d'air chaud ou d'eau chaude ainsi qu'un apport d'électricité sont également concernées.

En particulier, on peut citer les installations de type EfW (energy from waste) pour la production d'énergie à partir de déchets, les stations d'épuration STEP, les sites de compostage, les installations de séchage ou de combustion ainsi que les installations de production frigorigène avec des groupes à absorption ou à adsorption.

## Revendications

1. Dispositif (D) de production d'énergie, à partir du rayonnement solaire, destiné à un bâtiment (1), comprenant, du côté extérieur, au moins une première paroi (2) composée de panneaux photovoltaïques (4) et, vers l'intérieur à distance de la première paroi, une seconde paroi (3) disposée en vis à vis de la première paroi (2), un espace libre (5) étant créé entre la première (2) et la seconde paroi (3), l'énergie étant produite sous forme électrique par les panneaux photovoltaïques (4) et sous forme thermique par la seconde paroi (3), les panneaux photovoltaïques étant des panneaux photovoltaïques translucides (4), et la seconde paroi (3) étant opaque, de couleur sombre, et récupérant une partie du rayonnement qui a traversé la première paroi (2), **caractérisé en ce que** :- l'espace libre (5) est prévu pour permettre la circulation d'un flux d'air entre la première paroi (2) et la seconde paroi (3), de sorte que les panneaux photovoltaïques soient refroidis et l'air chaud, qui est capté mécaniquement, utilisé pour un usage thermique ou thermodynamique,
- le dispositif comprenant en outre un moyen d'introduction d'air dans l'espace libre (5), le moyen d'introduction d'air comprenant au moins une ouverture (9) prévue dans la seconde paroi (3).

2. Dispositif (D) selon la revendication 1, **caractérisé en ce qu'**il comprend un moyen de capture d'air entre la première paroi (2) et la seconde paroi (3) pour une utilisation.

3. Dispositif (D) selon la revendication 2, **caractérisé en ce que** le moyen de capture d'air entre la première et la seconde parois comprend une conduite (7, 26).

4. Dispositif (D) selon l'une quelconque des revendications précédentes, **caractérisé en ce qu'**il comprend un serpentin (10) avec une circulation d'eau ou d'un fluide thermique quelconque inséré entre la première (2) et la seconde paroi (3).

5. Dispositif (D) selon l'une quelconque des revendications précédentes, **caractérisé en ce que** la seconde paroi (3) comporte une couche d'isolant thermique.

6. Dispositif (D) selon l'une quelconque des revendications précédentes, **caractérisé en ce que** la seconde paroi (3) est partiellement translucide.

7. Dispositif (D) selon l'une quelconque des revendications précédentes, **caractérisé en ce que** la seconde paroi (3) est perforée.

8. Dispositif (D) selon l'une quelconque des revendications précédentes, **caractérisé en ce qu'**il est agencé de sorte que l'énergie thermique produite est utilisée pour réchauffer l'air de combustion d'un four (12), couplé à une production d'électricité.

9. Dispositif (D) selon l'une quelconque des revendications 1 à 7, **caractérisé en ce qu'**il est agencé de sorte que l'énergie thermique produite est utilisée pour chauffer un fluide contenu dans un réservoir (R).

## Patentansprüche

1. Energieerzeugungsanlagen-Dispositiv (D) mit Solarstrahlung für Gebäude (1), beinhaltend an der Außenseite eine erste Wand (2) bestehend aus Photovoltaik-Paneelen (4) und einwärts mit Entfernung von der ersten Wand eine zweite Wand (3), die gegenüber der ersten Wand (2) angeordnet ist; einen Freiraum (5), der sich zwischen der ersten (2) und der zweiten Wand (3) befindet; die Energie wird durch elektrische Leistung mit Photovoltaik-Paneelen (4) und in thermischer Form durch die zweite Wand (3) gewonnen; die Photovoltaik-Paneele sind durchsichtig (4) und die zweite Wand (3) ist opak, dunkelgefärbt, um einen Teil der Strahlung zurückzugewinnen, die die erste Wand (2) durchdringt, **dadurch gekennzeichnet, dass**: - der Freiraum (5) dafür vorgesehen ist, um die Zirkulation eines Luftstromes zwischen der ersten Wand (2) und der zweiten Wand (3) zu ermöglichen, sodass die Photovoltaik-Paneele gekühlt werden und die Heißluft, die mechanisch aufgefangen wird, zur thermischen oder thermodynamischen Nutzung dient,
- das Dispositiv umfasst zudem ein Lufteinleitungsmittel im Freiraum (5); das Lufteinleitungsmittel schließt zumindest eine Öffnung (9) in der zweiten Wand (3) ein.

2. Dispositiv (D) gemäß Anspruch 1, **dadurch gekennzeichnet, dass** es ein Lufteinleitungsmittel zwischen der ersten Wand (2) und der zweiten Wand (3) zur Nutzung vorsieht.

3. Dispositiv (D) gemäß Anspruch 2, **dadurch gekennzeichnet, dass** das Lufteinleitungsmittel zwischen der ersten und der zweiten Wand eine Leitung (7, 26) umfasst.

4. Dispositiv (D) gemäß einer der jeglichen oben genannten Ansprüche, **dadurch gekennzeichnet, dass** es eine Rohrschlange (10) mit einem Wasserkreislauf oder einem beliebigen Wärmefluid, das zwischen der ersten (2) und der zweiten (3) Wand eingesetzt ist, umfasst.

5. Dispositiv (D) gemäß einer der jeglichen oben genannten Ansprüche, **dadurch gekennzeichnet, dass** die zweite Wand (3) eine Wärmeisolierschicht beinhaltet.

6. Dispositiv (D) gemäß einer der jeglichen oben genannten Ansprüche, **dadurch gekennzeichnet, dass** die zweite Wand (3) teilweise durchsichtig ist.

7. Dispositiv (D) gemäß einer der jeglichen oben genannten Ansprüche, **dadurch gekennzeichnet, dass** die zweite Wand (3) perforiert ist.

8. Dispositiv (D) gemäß einer der jeglichen oben genannten Ansprüche, **dadurch gekennzeichnet, dass** es so angeordnet ist, dass die erzeugte Wärmeenergie dazu verwendet wird, um die Verbrennungsluft eines Ofens (12), gepaart mit einer Stromproduktion, aufzuwärmen.

9. Dispositiv (D) gemäß einer der jeglichen oben genannten Ansprüche von 1 bis 7, **dadurch gekennzeichnet, dass** es derart angeordnet ist, dass die erzeugte thermische Energie zum Erwärmen eines kontinuierlichen Mediums in einem Reservoir (R) verwendet wird.

## Claims

1. A device (D) for generating energy, from solar radiation, intended for a building (1), comprising, on the exterior side, at least one first wall (2) composed of translucent photovoltaic panels (4) and, on the interior at a distance from the first wall, a second wall (3) arranged opposite the first wall (2), a free space (5) being created between the first (2) and the second (3) wall, the energy being generated in the form of electricity by the photovoltaic panels (4) and in the form of heat by the second wall (3), the photovoltaic panels being translucide photovoltaic panels (4) and the second wall (3) being opaque, dark-colored and recovering some of the radiation which has passed through the first wall (2),
wherein the free space (5) is provided for allowing the circulation of an air flow between the first wall (2) and the second wall (3) so that the photovoltaic panels are cooled and the heated air which is mechanically captured, is used for a thermal or thermodynamic purpose,
and wherein the device comprises further means to introduce air in the free space (5), said means to introduce air including at least one outlet opening (9) in the second wall (3).

2. The device (D) as claimed in claim 1 comprising a means for capturing air between the first wall (2) and the second wall (3) for a useful purpose.

3. The device (D) as claimed in claim 2, wherein the means for capturing air between the first wall (2) and the second wall (3) comprises a pipe (7, 26).

4. The device (D) as claimed in any of the preceding claims comprising a winding pipe (10) with a circulation of water or any thermal fluid, inserted between the first wall (2) and the second wall (3)

5. The device (D) as claimed in any of the preceding claims wherein the second wall (3) comprises a thermally insulating layer.

6. The device (D) as claimed in any of the preceding claims wherein the second wall (3) is partially translucide.

7. The device (D) as claimed in any of the preceding claims wherein the second wall (3) is perforated.

8. The device (D) as claimed in any of the preceding claims, wherein it is arranged so that the thermal energy generated is used to heat the combustion air of a furnace (12) coupled to a generator of electricity.

9. The device (D) as claimed in any of the claims 1 to 7, wherein it is arranged so that the thermal energy generated is used to heat a fluid contained in a tank R).
